# EUROPÄISCHE PATENTSCHRIFT

(11) **EP 1 097 094 B1**
(45) Veröffentlichungstag und Bekanntmachung des Hinweises auf die Patenterteilung: **04.12.2002**
(21) Anmeldenummer: 99934624.0
(22) Anmeldetag: 08.07.1999
(51) Int. Cl.: B65G 43/02

(54) **FÖRDERGURT MIT TRÄGERGEWEBE, IN DEN LEITERSCHLEIFEN EINGEBETTET SIND**
CONVEYOR BELT WITH CARRIER TISSUE IN WHICH CONDUCTIVE LOOPS ARE EMBEDDED
BANDE TRANSPORTEUSE A TISSU PORTEUR DANS LEQUEL SONT INCORPOREES DES BOUCLES CONDUCTRICES

(30) Priorität: 16.07.1998 DE 19831854
(43) Veröffentlichungstag der Anmeldung: 09.05.2001
(73) Patentinhaber: ContiTech Transportbandsysteme GmbH, 30165 Hannover (DE)
(72) Erfinder: WILKE, Helmut, D-50737 Köln (DE); CERVERA, Daniel, D-50259 Pulheim (DE)
(74) Vertreter: Schneider, Egon
(86) Internationale Anmeldenummer: EP9904790
(87) Internationale Veröffentlichungsnummer: WO00003939

(56) Entgegenhaltungen:
- DE-A- 19 652 236
- DE-U- 29 604 039
- FR-A- 2 146 366
- US-A- 4 296 855

## Beschreibung

Die Erfindung betrifft einen Gurt, Riemen, Fördergurt, mit mindestens einem Trägergewebe, in den mindestens eine elektrisch leitfähige Schleife eingebettet ist. Die Erfindung betrifft ferner ein Verfahren zur Herstellung eines solchen Gurtes, Riemens, Fördergurtes.

Es ist seit langem bekannt, in Gurte, Riemen, Fördergurte etc. endlose Leiterschleifen zu unterschiedlichen Überwachungszwecken einzubetten (siehe z.B. DE 296 04 039 U). Derartige Leiterschleifen werden insbesondere in endlose Fördergurte eingebettet und der auf induktivem Wege in den Leiterschleifen erzeugte Stromfluß wird dazu verwendet, den bewegten Fördergurt ständig zu überwachen und beispielsweise durch etwa eindringende Fremdkörper verursachte Schäden, insbesondere Längsrisse, frühzeitig festzustellen. In jüngster Vergangenheit wurde auch schon vorgeschlagen, jeder Leiterschleife im Fördergurt einen Transponder, bestehend aus einem integrierten Schaltkreis, der leitend mit einer Spule verbunden ist, zuzuordnen. In diesem Fall werden die Leiterschleifen von einer außerhalb des Fördergurtes befindlichen Einrichtung auf induktivem Wege mit Energie versorgt, die sie ihrerseits wiederum auf induktivem Wege in die ihnen zugeordneten Transponder einkoppeln. Die Transponder übermitteln auf umgekehrtem Wege eine in ihrem Schaltkreis gespeicherte individuelle Kennung an die Einrichtung. Die externe Einrichtung schließt aus dem Empfang des Signals auf die Unversehrtheit der Leiterschleife bzw. des Transponders und damit auf die Unversehrtheit des Fördergurtes im Bereich der Leiterschleife. Umgekehrt wird aus einer Nichtübermittlung der individuellen Kennung auf eine Beschädigung der Leiterschleife und damit auf eine Beschädigung des Fördergurtes im Bereich der Leiterschleife geschlossen (siehe auch DE 44 44 262, wo ein derartiges Überwachungssystem ausführlich beschrieben ist).

Die obigen Ausführungen zeigen, daß eine zuverlässige Überwachung mit Hilfe der Leiterschleifen nur dann möglich ist, wenn ein Ausfall einer Leiterschleife ausschließlich auf eine Schädigung des Gurtes, Riemens, Fördergurtes etc. zurückzuführen ist. Der Haltbarkeit der Leiterschleifen gegenüber den alltäglichen Belastungen kommt also eine besondere Bedeutung zu. Darüber hinaus sollen Leiterschleifen zu Überwachungszwecken auch in besonders dünnen Fördergurten, die als Festigkeitsträger mindestens ein Trägergewebe in Form einer Textileinlage aufweisen und nur von einer sehr dünnen elastomeren Deckschicht abgedeckt sind, eingebettet werden. Es ist offensichtlich, daß die Anforderung an die Leiterschleife, nämlich die hohe Haltbarkeit und die Möglichkeit der Einbettung in Fördergurte mit einem Trägergewebe, die eine extrem dünne Deckschicht aufweisen, entgegengesetzt sind.

Aus der DE 196 01 899 C1 ist es bekannt, die Leiterschleifen aus einer elektrisch leitfähigen Folie zu fertigen und in einen Fördergurt einzubetten. Die Leiterschleifen weisen eine Dicke auf, die zwischen 20 µm und 200 µm liegt, so daß sie auch zur Einbettung in Fördergurte mit extrem dünnen Deckschichten geeignet sind. Weist der Fördergurt Stahlseile als Festigkeitsträger auf, so hat sich gezeigt, daß die Leiterschleifen auch hohen mechanischen alltäglichen Biege- und Zugbelastungen standhalten. Weist der Fördergurt jedoch als Festigkeitsträger ein oder mehrere Trägergewebe auf, so hat sich gezeigt, daß die Leiterschleifen nur normalen alltäglichen Biege- und Zugbelastungen standhalten, bei hohen Zugbelastungen, die noch nicht zu einer Schädigung des Fördergurtes führen, jedoch reißen können. Dies ist wohl darauf zurückzuführen, daß es bei hohen Zugbelastungen zu einer Dehnung des Trägergewebes und damit zu einer Dehnung der Leiterschleifen kommt, die zu einer Durchtrennung der Leiterschleifen führen kann.

Der Erfindung liegt die Aufgabe zugrunde, einen Gurt, Riemen, Fördergurt etc. - insbesondere mit mindestens einem Trägergewebe als Festigkeitsträger - zu schaffen, der einerseits über eine dünne Deckschicht verfügen und der andererseits durch eingebettete Leiterschleifen zuverlässig überwacht werden kann. Der Erfindung liegt ferner die Aufgabe zugrunde, ein Verfahren zur Herstellung eines solchen Gurtes, Riemens, Fördergurtes etc. zu schaffen.

Gemäß den kennzeichnenden Merkmalen des Anspruchs 1 wird die Aufgabe dadurch gelöst, daß zumindest ein Teil der elektrisch leitfähigen Schleife auf das Trägergewebe aufgenäht ist.

Gemäß dem nebengeordneten Anspruch 12 wird die Aufgabe zusätzlich dadurch gelöst, daß zunächst ein an sich bekanntes handelsübliches Trägergewebe hergestellt wird, auf das nachträglich die elektrisch leitfähigen Leiterschleifen aufgenäht werden und das unter Verwendung des derart vorbereiteten Trägergewebes der Gurt, Riemen, Fördergurt etc. in an sich bekannter Weise fertiggestellt wird. Soll das Trägergewebe in einen Zweilagengurt eingebettet werden, so wird es vorzugsweise vor dem Aufnähen der Leiterschleife auf das Trägergewebe gummiert. Soll das Trägergewebe hingegen in einem Einlagengurt eingebettet werden, so wird es vorzugsweise vor dem Aufnähen der Leiterschleife auf das Trägergewebe mit einer PVC-Paste getränkt.

Gemäß dem nebengeordneten Anspruch 13 wird die Aufgabe zusätzlich dadurch gelöst, daß zunächst ein Trägergewebe hergestellt wird, das voneinander beabstandete elektrisch leitfähige Fäden enthält, von denen nachträglich jeweils zwei durch Aufnähen einer elektrisch leitfähigen Naht zu einer elektrisch leitfähigen Leiterschleife verbunden werden und daß unter Verwendung des derart vorbereiteten Trägergewebes der Gurt, Riemen, Fördergurt etc. in an sich bekannter Weise fertiggestellt wird. Vor dem Aufnähen der elektrisch leitfähigen Nähte kann das Trägergewebe gemäß dem vorherstehenden Absatz behandelt werden.

Gemäß dem nebengeordneten Anspruch 14 wird die Aufgabe zusätzlich dadurch gelöst, daß zunächst die Schleife 4 auf ein gitterähnliches Trägergewebe aufgenäht wird und daß das derartig vorbereitete Trägergewebe an beliebiger Position in den Fördergurtrohling eingebracht wird und der Fördergurt in an sich bekannter Weise fertiggestellt wird.

Der Grundgedanke der Erfindung ist darin zu sehen, daß die Leiterschleifen aus Fäden bestehen, die wie eine Naht direkt auf das Trägergewebe aufgenäht sind, bzw. die bereits im Trägergewebe enthalten sind. Die Leiterschleifen bestehen also aus einem Material, das sehr ähnliche bzw. die gleichen Verformungseigenschaften aufweist, wie die Fäden des Trägergewebes.

Die Vorteile der Erfindung sind insbesondere darin zu sehen, daß auch Gurte, Riemen, Fördergurte etc., die als Festigkeitsträger mindestens ein Trägergewebe und eine extrem dünne Deckschicht aufweisen, mit Leiterschleifen versehen werden können. Es hat sich gezeigt, daß auch Fördergurte mit Leiterschleifen versehen werden können, die eine Deckschicht mit einer Dicke von ≤ 6 mm aufweisen. Dennoch halten die in den Fördergurt eingebetteten Leiterschleifen hohen mechanischen Belastungen, insbesondere Zugbelastungen, stand. Dies ist darauf zurückzuführen, daß die aus Fäden bestehenden Leiterschleifen (nahezu) die gleichen Verformungseigenschaften aufweisen, wie die Fäden des Trägergewebes, so daß sich die Dehnung des Trägergewebes auf die Leiterschleifen überträgt.

Die Vorteile des Herstellungsverfahrens gemäß dem nebengeordneten Anspruch 12 sind insbesondere darin zu sehen, daß durch die Herstellung eines handelsüblichen Trägergewebes in einem ersten Verfahrensschritt eine hohe Flexibilität in der Herstellung der Fördergurte erreicht wird. So kann das handelsübliche Trägergewebe zwischengelagert werden und es ist möglich, flexibel auf Kundenwünsche bezüglich der Ausstattung von Fördergurten mit Leiterschleifen zu reagieren, da die Leiterschleifen erst nachträglich auf das Trägergewebe aufgenäht werden.

Die Vorteile des Verfahrens gemäß dem nebengeordneten Anspruch 13 sind insbesondere darin zu sehen, daß in das Trägergewebe bereits bei der Herstellung des Trägergewebes Bestandteile der Leiterschleifen eingearbeitet werden. Es brauchen nachträglich nur noch die elektrisch leitfähigen Fäden, die in dem Trägergewebe vorhanden sind, leitend miteinander verbunden werden, so daß sich der Aufwand für das nachträgliche Aufnähen reduziert.

Die Vorteile des Verfahrens gemäß dem nebengeordneten Anspruch 14 sind insbesondere darin zu sehen, daß durch das Verfahren auf einfache Art und Weise auch Gurte, Riemen, Fördergurte etc., mit metallischem Zugträger mit Leiterschleifen versehen werden können.

Gemäß einem ersten Ausführungsbeispiel der Erfindung enthält das Trägergewebe elektrisch leitfähige Fäden, die weitgehend in Querrichtung des Trägergewebes verlaufen und von denen jeweils zwei durch auf das Trägergewebe aufgenähte elektrisch leitfähige Fäden miteinander verbunden sind.

Gemäß einem alternativen Ausführungsbeispiel der Erfindung sind die kompletten Leiterschleifen vollständig auf das Trägergewebe des Fördergurtes aufgenäht. Hierbei kann als Faden, der in der Naht die elektrisch leitfähige Schleife bildet, ein verzinkter oder verkupferter Stahldraht verwendet werden. Die Verwendung eines Stahldrahtes weist den Vorteil einer hohen Festigkeit und einer hohen Flexibilität auf, so daß die Leiterschleife eine Dehnung des Fördergurtes bei Zugbelastung und damit eine Dehnung des Trägergewebes besonders gut "mitmachen" kann. Hierbei hat sich herausgestellt, daß ein verzinkter Stahldraht eine ausreichende elektrische Leitfähigkeit aufweist. Eine besonders gute elektrische Leitfähigkeit kann jedoch dadurch erzielt werden, daß der Stahldraht mit einer Kupferschicht überzogen wird.

Alternativ kann als Faden, der in der Naht die elektrisch leitfähige Schleife bildet, ein Kupferdraht verwendet werden. Der Vorteil dieser Weiterbildung ist darin zu sehen, daß ein Kupferdraht eine optimale Leitfähigkeit aufweist. Unabhängig davon, aus welchem Material der Faden besteht, der in der Naht die elektrisch leitfähige Schleife bildet, brauchen die übrigen beim Aufnähen der Leiterschleife verwendeten Fäden nicht aus einem elektrisch leitfähigen Material zu bestehen. Vielmehr können als weitere Fäden beispielsweise Polyesterfäden verwendet werden.

Gemäß einer Weiterbildung der Erfindung weist der Faden, der in der Naht die Leiterschleife bildet, mehrere Fibrillen, bevorzugt 3-20 Fibrillen, und damit eine besonders hohe Flexibilität auf. Der Vorteil dieser Weiterbildung ist darin zu sehen, daß Leiterschleifen aus derartigen Fäden besonders hohe mechanische Zugbelastungen aufnehmen können. Wird ein Faden mit mehreren Fibrillen verwendet, so werden einige Fibrillen bevorzugt aus Kupfer und die übrigen Fibrillen des Fadens aus Stahl ausgebildet, so daß sich einerseits eine gute elektrische Leitfähigkeit (aufgrund des Kupferanteils) und andererseits eine gute Festigkeit und Flexibität (aufgrund des Stahlanteils) des Fadens ergibt.

Gemäß einer weiteren Weiterbildung der Erfindung weisen die zur Bildung der Leiterschleife verwendeten Fäden einen Durchmesser von 0,1 bis 1 mm auf. Der Vorteil dieser Weiterbildung ist darin zu sehen, daß Fäden mit einem derartigen Durchmesser problemlos von handelsüblichen Nähmaschinen verarbeitet werden können.

Gemäß einer weiteren Weiterbildung der Erfindung werden die beiden Enden einer auf das Trägergewebe aufgenähten Leiterschleifen durch eine Überdeckungsnaht miteinander verbunden, die von einem Ende der Leiterschleife ausgehend in einer zickzackförmigen Linie bzw. in einer einer zickzackförmigen Linie ähnlichen Linie über das andere Ende der Leiterschleife geführt wird. Durch eine derartige Überdeckungsnaht kann auf einfache Art und Weise sichergestellt werden, daß die beiden Enden der Leiterschleife elektrisch leitend miteinander verbunden werden.

Gemäß einer weiteren Weiterbildung der Erfindung weisen die Leiterschleifen eine Wendelung auf. Der Vorteil dieser Weiterbildung ist darin zu sehen, daß die Leiterschleifen noch besser Längenveränderungen des Trägergewebes aufnehmen können, ohne zerstört zu werden. Bevorzugt werden zur Erzielung dieses Vorteils beim Aufnähen der Leiterschleife auf das Trägergewebe Nähverfahren verwendet, bei dem sich durch die Führung des Fadens automatisch eine Wendelung des Fadens ergibt.

Gemäß einer weiteren Weiterbildung der Erfindung steht jede in den Gurt, Riemen, Fördergurt etc. eingebettete Leiterschleife mit einem ihr zugeordneten Transponder in Wirkverbindung, so daß ein Überwachungssystem, wie es beispielsweise in der DE 44 44 262 ausführlich beschrieben ist, betreibbar ist.

Ein Ausführungsbeispiel und weitere Vorteile der Erfindung werden im Zusammenhang mit den nachstehenden Figuren erläutert, darin zeigt:
Fig. 1 ein Trägergewebe in Aufsicht,
Fig. 2 ein Trägergewebe in Aufsicht,
Fig. 3 ein Trägergewebe im Querschnitt,
Fig. 4 einen Fördergurt im Querschnitt,
Fig. 5 einen Fördergurt im Querschnitt.

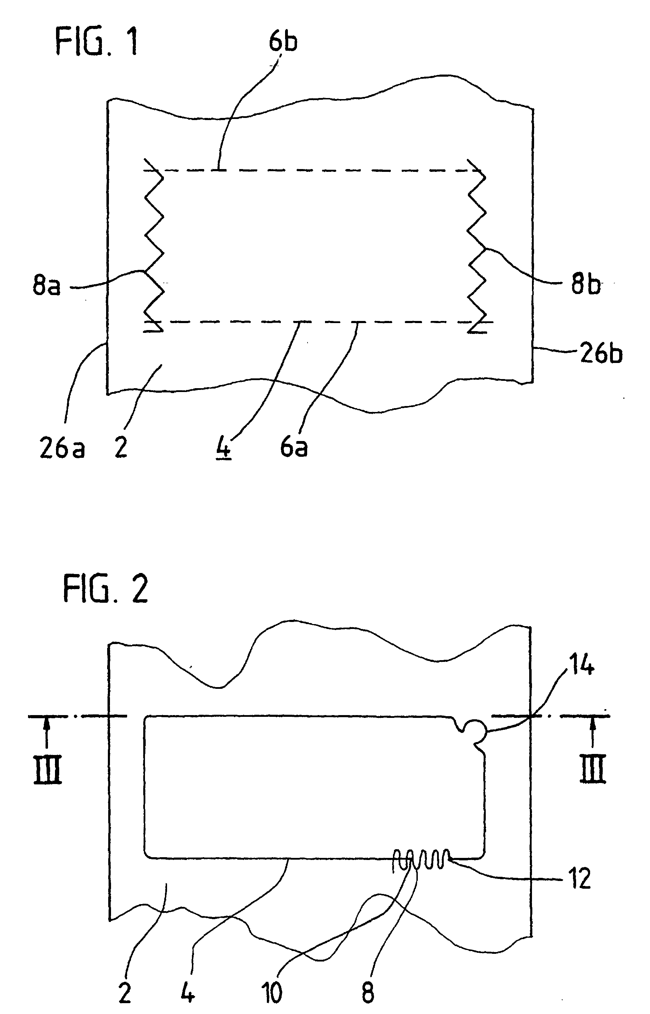

Figur 1 zeigt ein Trägergewebe 2, in das bereits bei der Herstellung elektrisch leitfähige Fäden 6a und 6b eingearbeitet worden sind, die bevorzugt in Querrichtung des Trägergewebes 2 velaufen. Die voneinander beabstandeten elektrisch leitfähigen Fäden 6a und 6b werden durch die Überdeckungsnähte 8a und 8b, die nahe der Gewebekanten 26a und 26b parallel zu diesen verlaufen, elektrisch leitend miteinander verbunden. Die Überdeckungsnähte 8a und 8b werden auf das Trägegewebe 2 aufgenäht. Die Länge, die von den Überdeckungsnähten 8a und 8b überdeckt wird, ist etwas größer als der Abstand der elektrisch leitfähigen Fäden 6a und 6b voneinander, so daß sichergestellt ist, daß die Überdeckungsnähte 8a und 8b die elektrisch leitfähigen Fäden 6a und 6b elektrisch miteinander verbinden. Die elektrisch leitfähigen Fäden 6a und 6b und die Überdeckungsnähte 8a und 8b bilden auf dem Trägergewebe 2 eine Leiterschleife 4. Derartig ausgebildete Leiterschleifen 4 befinden sich voneinander beabstandet auf dem Trägergewebe 2.

Figur 2 zeigt ebenfalls ein Trägergewebe 2, auf die die komplette Leiterschleife 4 vollständig in Form einer Naht (vergleichbar mit einer Naht, mit der beispielsweise ein Flicken auf ein Stück Stoff genäht wird) aufgenäht ist. Die beiden Enden 10 und 12 der Leiterschleife 4 werden durch eine Überdeckungsnaht 8 miteinander verbunden, die von dem Ende 12 der Leiterschleife 4 ausgehend in einer zickzackförigen Linie bzw. in einer einer zickzackförmigen Linie ähnliche Linie über das andere Ende 10 der Leiterschleife 4 auf die Leiterschleife 4 geführt wird. Die Überdeckungsnaht 8-überbrückt eine Länge, die größer ist als der Abstand der beiden Enden 10 und 12 der Leiterschleife 4 voneinander. Durch den zickzackförmigen Verlauf der Überdeckungsnaht 8 ist sichergestellt, daß ausgehend von dem Ende 12 der Leiterschleife 4 das Ende 10 der Leiterschleife 4 "getroffen" wird. Vorzugsweise besteht die Leiterschleife 4 lediglich aus einem Faden und ab dem Ende 12 der Leiterschleife 4 geht dieser Faden in die Überdeckungsnaht 8 über, die den Kontaktschluß der Enden 10 und 12 der Leiterschleife 4 herstellt. Alternativ ist es ebenfalls möglich, die Überdeckungsnaht 8 als separaten elektrisch leitfähigen Faden auszubilden, so wie es auch in der Figur 1 gezeigt ist, jedoch ist dann ein zusätzlicher Verfahrensschritt zur Fertigstellung der Leiterschleife 4 auf dem Trägergewebe 2 notwendig.

Gegebenenfalls kann die Leiterschleife 4 eine Ausbuchtung 14 enthalten. Oberhalb oder unterhalb dieser Ausbuchtung 14 kann im fertiggestellten Fördergurt ein Transponder, bestehend aus einem integrierten Schaltkreis, einer Spule und leitenden Verbindungen von der Spule zu dem integrierten Schaltkreis, derartig angeordnet werden, daß eine besonders gute Kommunikation zwischen dem Transponder und der Leiterschleife 4 möglich ist. Für genauere Erläuterungen sei in diesem Zusammenhang auf die DE 44 44 262 verwiesen.

Auch das in der Figur 2 gezeigte Trägergewebe kann mehrere voneinander beabstandete Leiterschleifen 4 enthalten. Es ist ebenfallds möglich, von den Trägergeweben gemäß der Figuren 1 und 2 einzelne Stücke abzuschneiden, die jeweils eine Leiterschleife 4 enthalten. Derartig konfektionierte Leiterschleifen 4 können in die Deckschicht eines beliebig aufgebauten Fördergurtes 20 eingebracht werden, auch wenn diese eine extrem geringe Dicke aufweist. Insbesondere können die einzelnen Leiterschleifen auch in die Deckschicht von Fördergurten 20 mit metallischern Zugträgern eingebracht werden.

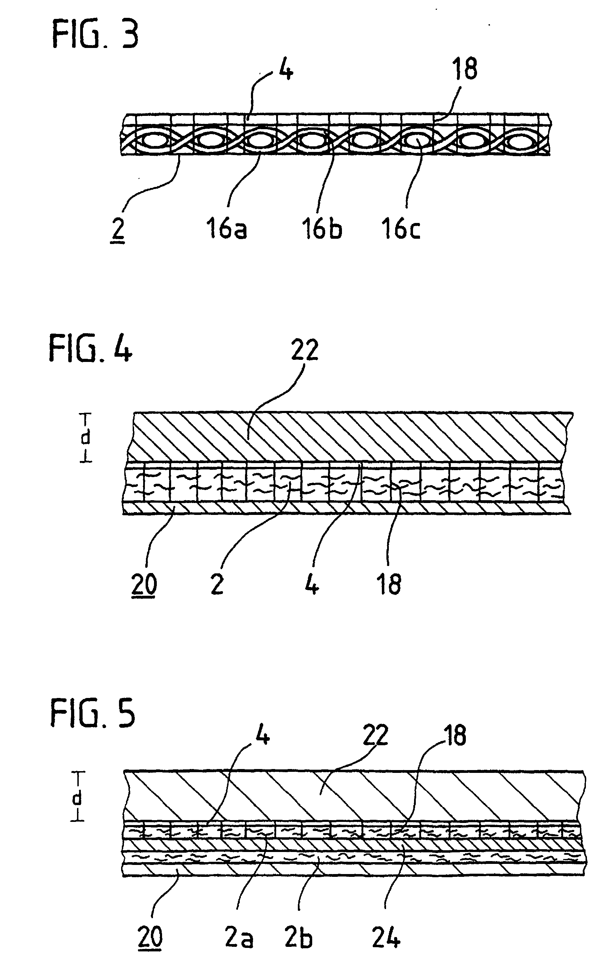

Figur 3 zeigt einen Querschnitt durch das Trägergewebe entlang der in der Figur 2 gezeigten Linie III - III. Das Trägergewebe 2 besteht aus Fäden 16a, 16b und 16c. Auf das Trägergewebe 2 ist mit Hilfe des Fadens 18 die Leiterschleife 4 aufgenäht. Hierbei bildet die Leiterschleife 4 den Unterfaden und der Nähfaden 18 den Oberfaden, d.h. die Leiterschleife 4 wird von dem Nähfaden 18 "umschlungen". Die komplette Naht besteht also aus der Leiterschleife 4 und dem Nähfaden 18. Als Unterfaden bzw. Leiterschleife 4 kann beispeilsweise ein verzinkter oder ein verkupferter Stahldraht verwendet werden. Alternativ ist es möglich, einen Kupferdraht zu verwenden. Der Stahldraht bzw. der Kupferdraht enthält vorzugsweise mehrere Fibrillen, bevorzugte 3-20 Fibrillen. Es ist ebenfalls möglich, die Leiterschleife 4 als Draht auszubilden, der sowohl Fibrillen aus Kupfer als auch Fibrillen aus Stahl enthält. In jedem Fall weist die Leiterschleife 4 bevorzugt einen Durchmesser von 0,1 bis 1 mm auf. Der Nähfaden 18 kann entweder als Textil- oder als Metallfaden ausgebildet sein, da er zu der elektrischen Leitfähigkeit der Leiterschleife 4 keinen Beitrag zu leisten braucht.

Die in den Figuren 1 bis 3 gezeigten Trägergewebe können in an sich bekannter Art und Weise während der Herstellung eines Fördergurtes in diesen eingebettet werden.

Figur 4 zeigt einen einlagigen Fördergurt 20, in den eine Gewebelage 2 eingebettet ist. Die Gewebelage 2 ist so aufgebaut, wie es in der Figur 3 gezeigt ist, wobei in der Figur 4 die Fäden 16a, 16b und 16c lediglich angedeutet sind. Auf das Trägergewebe 2 ist die Leiterschleife 4 mit Hilfe des Nähfadens 18 aufgenäht so wie im Zusammenhang mit der Figur 3 erläutert worden ist. Der Fördergurt 20 kann eine extrem dünne Deckschicht 22 mit einer Dicke d ≤ 6 mm aufweisen.

Figur 5 zeigt einen mehrlagigen, insbesondere zweilagigen Fördergurt im Querschnitt, der zwei Trägergewebe 2a und 2b aufweist, die durch eine Lage 24, bevorzugt durch eine Gummilage 24, voneinander getrennt sind. Auch in der Figur 5 sind die Fäden 16a, 16b und 16c der Trägergewebe 2a und 2b nur angedeutet. Das Trägergewebe 2a ist genauso aufgebaut, wie es im Zusammenhang mit der Figur 3 bereits erläutert worden ist. Auch ein mehrlagiger Fördergurt 20 kann durch das erfindungsgemäße Aufbringen der Leiterschleife 4 auf das Trägergewebe 2a eine extrem dünne Deckschicht 22 mit einer Dicke d ≤ 6 mm aufweisen.

Bei dem in der Figur 5 gezeigten Fördergurt ist die Leiterschleife zur Deckschicht 22 hin orientiert. Es ist ebenfalls möglich, den Fördergurt so aufzubauen, daß die Leiterschleife 4 zur Lage 24 orientiert ist und dann zwischen den Trägergeweben 2a und 2b liegt. Der Vorteil eines solchen Aufbaus ist darin zu sehen, daß die Leiterschleife 4 näher an der neutralen Faser liegt, so daß auf die Leiterschleife 4 geringere Biege- und Zugbeanspruchungen wirken. Darüber hinaus ist die Leiterschleife 4 in diesem Fall durch die Trägergewebe 2a und 2b gegen Beaufschlagungen des Fördergurtes geschützt.

### Bezugszeichenliste

- 2: Trägergewebe
- 4: Leiterschleife
- 6a, 6b: elektrisch leitfähige Fäden
- 8a, 8b: Überdeckungsnaht
- 10, 12: Enden der Leiterschleife
- 14: Ausbuchtung
- 16a, 16b, 16c: Fäden
- 18: Nähfaden
- 20: Fördergurt
- 22: Deckplatte
- 24: Lage
- 26a, 26b: Gewebekanten

## Patentansprüche

1. Gurt, Riemen, Fördergurt (20), mit mindestens einem Trägergewebe (2), in den mindestens eine elektrisch leitfähige Schleife (4) eingebettet ist,
**dadurch gekennzeichnet, daß**
zumindest ein Teil der elektrisch leitfähigen Schleife (4) auf das Trägergewebe (2) aufgenäht ist.

2. Gurt, Riemen, Fördergurt (20) nach Anspruch 1, **dadurch gekennzeichnet, daß** das Trägergewebe (2) beabstandete elektrisch leitfähige Fäden (6a, 6b) enthält, und daß jeweils zwei elektrisch leitfähige Fäden (6a, 6b) durch aufgenähte elektrisch leitfähige Fäden (8a, 8b) miteinander verbunden sind.

3. Gurt, Riemen, Fördergurt (20) nach Anspruch 1, **dadurch gekennzeichnet, daß** die komplette elektrisch leitfähige Schleifen (4) vollständig auf das Trägergewebe (2) aufgenäht ist.

4. Gurt, Riemen, Fördergurt (20) nach Anspruch 3, **dadurch gekennzeichnet, daß** als Faden (4), der in der Naht (4, 18) die elektrisch leitfähige Leiterschleife (4) bildet, ein verzinkter oder verkupferter Stahldraht verwendet wird.

5. Gurt, Riemen, Fördergurt (20) nach Anspruch 3, **dadurch gekennzeichnet, daß** als Faden (4) der in der Naht (4, 18) die elektrisch leitfähige Leiterschleife (4) bildet, ein Kupferdraht verwendet wird.

6. Gurt, Riemen, Fördergurt (20) nach einem der Ansprüche 4 bis 5, **dadurch gekennzeichnet, daß** der Draht mehrere Fibrillen, bevorzugt 3-20 Fibrillen, enthält.

7. Gurt, Riemen, Fördergurt (20) nach Anspruch 3, **dadurch gekennzeichnet, daß** als Faden (4), der in der Naht (4, 18) die elektrisch leitfähige Leiterschleife (4) bildet, ein Draht verwendet wird, der sowohl Fibrillen aus Kupfer als auch Fibrillen aus Stahl enthält.

8. Gurt, Riemen, Fördergurt (20) nach einem der Ansprüche 4 bis 7, **dadurch gekennzeichnet, daß** der Draht einen Durchmesser von 0,1 bis 1 mm aufweist.

9. Gurt, Riemen, Fördergurt (20) nach einem der Ansprüche 3 bis 8, **dadurch gekennzeichnet, daß** die beiden Enden (10, 12) einer elektrisch leitfähigen Schleife (4) durch eine Überdeckungsnaht (8) miteinander verbunden werden, die von einem Ende (12) der elektrisch leitfähigen Schleife (4) ausgehend, in einer zickzackförmigen Linie bzw. in einer einer zickzackförmigen Linie ähnlichen Linie über das andere Ende (10) der elektrisch leitfähigen Schleife (4) geführt wird.

10. Gurt, Riemen, Fördergurt (20) nach einem der Ansprüche 1 bis 9, **dadurch gekennzeichnet, daß** die elektrisch leitfähigen Schleifen (4) eine Wendelung aufweisen.

11. Gurt, Riemen, Fördergurt (20) nach einem der Ansprüche 1 bis 10, **dadurch gekennzeichnet, daß** mindestens eine elektrisch leitfähige Schleife (4) mit einem Transponder in Wirkverbindung steht.

12. Verfahren zur Herstellung eines Gurtes, Riemens, Fördergurtes (20) mit mindestens einem Trägergewebe (2), in den mindestens eine elektrisch leitfähige Schleife (4) eingebettet ist, **dadurch gekennzeichnet, daß** zunächst ein an sich bekanntes handelsübliches Trägegewebe (2) hergestellt wird, auf das nachträglich die elektrisch leitfähigen Schleifen (4) aufgenäht werden, und daß unter Verwendung des derart vorbereiteten Trägergewebes (2) der Gurt, Riemen, Fördergurt (20) in an sich bekannter Weise fertiggestellt wird.

13. Verfahren zur Herstellung eines Gurtes, Riemens, Fördergurtes (20) mit mindestens einem Trägergewebe (2), in den mindestens eine elektrisch leitfähige Schleife (4) eingebettet ist, **dadurch gekennzeichnet, daß** zunächst ein Trägergewebe (2) hergestellt wird, das voneinander beabstandete elektrisch leitfähige Fäden (6a, 6b) enthält, von denen nachträglich jeweils zwei durch Aufnähen von zwei elektrisch leitfähigen Nähten (8a, 8b) zu einer elektrisch leitfähigen Schleife (4) verbunden werden und daß unter Verwendung des derart vorbereiteten Trägergewebes (2) der Gurt, Riemen, Fördergurt (20) in an sich bekannter Weise fertiggestellt wird.

14. Verfahren zur Herstellung eines Gurtes, Riemens, Fördergurtes (20) mit einem metallischen Zugträger, in den mindestens eine elektrisch leitfähige Schleife (4) eingebettet ist, **dadurch gekennzeichnet, daß** zunächst die Schleife (4) auf ein gitterähnliches Trägergewebe (2) aufgenäht wird und daß das derartig vorbereitete Trägergewebe an beliebiger Position in den Fördergurtrohling eingebracht wird und der Fördergurt (20) in an sich bekannter Weise fertiggestellt wird.

15. Trägergewebe (2) zur Verwendung in einem Gurt, Riemen, Fördergurt (20), in den mindestens eine elektrisch leitfähige Schleife (4) eingebettet ist, **dadurch gekennzeichnet, daß** die elektrisch leitfähige Schleife (4) auf das Trägergewebe (2) aufgenäht ist.

16. Trägergewebe (2) nach Anspruch 15, **dadurch gekennzeichnet, daß** die elektrisch leitfähige Schleife (4) gemäß einem der kennzeichnenden Merkmale der Ansprüche 2 bis 10 ausgebildet.

## Claims

1. Belt, strap, conveyor belt (20), having at least one support fabric (2) in which at least one electrically conductive loop (4) is embedded, **characterised in that** at least a portion of the electrically conductive loop (4) is sewn onto the support fabric (2).

2. Belt, strap, conveyor belt (20) according to claim 1, **characterised in that** the support fabric (2) contains electrically conductive threads (6a, 6b) at a spacing from one another, and **in that** respectively two electrically conductive threads (6a, 6b) are connected to one another by sewn-on electrically conductive threads (8a, 8b).

3. Belt, strap, conveyor belt (20) according to claim 1, **characterised in that** the complete electrically conductive loop (4) is entirely sewn onto the support fabric (2).

4. Belt, strap, conveyor belt (20) according to claim 3, **characterised in that** a galvanised or coppered steel wire is used as the thread (4) which forms the electrically conductive loop (4) in the seam (4, 18).

5. Belt, strap, conveyor belt (20) according to claim 3, **characterised in that** a copper wire is used as the thread (4) which forms in the seam (4, 18) the electrically conductive loop (4).

6. Belt, strap, conveyor belt (20) according to one of claims 4 to 5, **characterised in that** the wire contains a plurality of fibrils, preferably 3 - 20 fibrils.

7. Belt, strap, conveyor belt (20) according to claim 3, **characterised in that**, as the thread (4) which forms in the seam (4, 18) the electrically conductive loop (4), a wire is used which contains both fibrils of copper and fibrils of steel.

8. Belt, strap, conveyor belt (20) according to one of claims 4 to 7, **characterised in that** the wire has a diameter of between 0.1 and 1 mm.

9. Belt, strap, conveyor belt (20) according to one of claims 3 to 8, **characterised in that** the two ends (10, 12) of an electrically conductive loop (4) are connected to one another by a covering seam (8) which, starting from one end (12) of the electrically conductive loop (4), is led in a zigzag line or in a line similar to a zigzag line over the other end (10) of the electrically conductive loop (4).

10. Belt, strap, conveyor belt (20) according to one of claims 1 to 9, **characterised in that** the electrically conductive loops (4) have a spiralled portion.

11. Belt, strap, conveyor belt (20) according to one of claims 1 to 10, **characterised in that** at least one electrically conductive loop (4) is operationally connected to a transponder.

12. Method of producing a belt, strap, conveyor belt (20) having at least one support fabric (2) in which at least one electrically conductive loop (4) is embedded, **characterised in that** first of all a commercially usual support fabric (2), which is known per se, is produced, onto which subsequently the electrically conductive loops (4) are sewn, and **in that** the belt, strap, conveyor belt (20) is completed in a manner known per se by using the support fabric (2) prepared in this manner.

13. Method of producing a belt, strap, conveyor belt (20) having at least one support fabric (2) in which at least one electrically conductive loop (4) is embedded, **characterised in that** first of all a support fabric (2) is produced which contains electrically conductive threads (6a, 6b) at a spacing from one another, of which subsequently respectively two are connected to form an electrically conductive loop (4) by sewing-on two electrically conductive seams (8a, 8b), and **in that** the belt, strap, conveyor belt (20) is completed in a manner known per se by using the support fabric (2) prepared in this manner.

14. Method of producing a belt, strap, conveyor belt (20) having a metallic tension carrier in which at least one electrically conductive loop (4) is embedded, **characterised in that** first of all the loop (4) is sewn onto a grid-like support fabric (2), and **in that** the support fabric, prepared in this manner, is introduced into the conveyor belt blank at any position, and the conveyor belt (20) is completed in a manner known per se.

15. Support fabric (2) to be used in a belt, strap, conveyor belt (20), in which at least one electrically conductive loop (4) is embedded, **characterised in that** the electrically conductive loop (4) is sewn onto the support fabric (2).

16. Support fabric (2) according to claim 15, **characterised in that** the electrically conductive loop (4) is configured according to one of the **characterising** features of claims 2 to 10.

## Revendications

1. Bande, courroie, bande transporteuse (20) comprenant au moins un tissu support (2) dans lequel est incorporée au moins une boucle (4) électriquement conductrice,
**caractérisée en ce que** au moins une partie de la boucle (4) électriquement conductrice est cousue sur le tissu support (2).

2. Bande, courroie, bande transporteuse (20) selon la revendication 1, **caractérisée en ce que** le tissu support (2) contient des fils espacés (6a, 6b), électriquement conducteurs, et **en ce que**, à chaque fois, deux fils (6a, 6b) électriquement conducteurs sont reliés entre eux par des fils cousus (8a, 8b), électriquement conducteurs.

3. Bande, courroie, bande transporteuse (20) selon la revendication 1, **caractérisée en ce que** la boucle complète (4), électriquement conductrice, est entièrement cousue sur le tissu support (2).

4. Bande, courroie, bande transporteuse (20) selon la revendication 3, **caractérisée en ce que** l'on utilise, comme fil (4) qui, dans la couture (4, 18), forme la boucle (4) électriquement conductrice, un fil d'acier galvanisé ou cuivré.

5. Bande, courroie, bande transporteuse (20) selon la revendication 3, **caractérisée en ce que** l'on utilise, comme fil (4) qui, dans la couture (4, 18), forme la boucle (4) électriquement conductrice, un fil de cuivre.

6. Bande, courroie, bande transporteuse (20) selon l'une ou l'autre des revendications 4 et 5, **caractérisée en ce que** le fil contient plusieurs fibrilles, contenant de préférence entre 3 et 20 fibrilles.

7. Bande, courroie, bande transporteuse (20) selon la revendication 3, **caractérisée en ce que** l'on utilise, comme fil (4) qui, dans la couture (4, 18), forme la boucle (4) électriquement conductrice, un fil qui contient aussi bien des fibrilles en cuivre que des fibrilles en acier.

8. Bande, courroie, bande transporteuse (20) selon l'une quelconque des revendications 4 à 7, **caractérisée en ce que** le fil a un diamètre compris entre 0,1 mm et 1 mm.

9. Bande, courroie, bande transporteuse (20) selon l'une quelconque des revendications 3 à 8, **caractérisée en ce que** les deux extrémités (10, 12) d'une boucle (4) électriquement conductrice sont reliées entre elles par une couture de recouvrement (8) qui, en partant d'une extrémité (12) de la boucle (4) électriquement conductrice, est guidée au-delà de l'autre extrémité (10) de la boucle (4) électriquement conductrice, en suivant une ligne en zigzag ou une ligne semblable à une ligne en zigzag.

10. Bande, courroie, bande transporteuse (20) selon l'une quelconque des revendications 1 à 9, **caractérisée en ce que** les boucles (4) électriquement conductrices comprennent une spirale.

11. Bande, courroie, bande transporteuse (20) selon l'une quelconque des revendications 1 à 10, **caractérisée en ce que** au moins une boucle (4) électriquement conductrice est en liaison active avec un transpondeur.

12. Procédé de fabrication d'une bande, d'une courroie, d'une bande transporteuse (20) comprenant au moins un tissu support (2) dans lequel est incorporée au moins une boucle (4) électriquement conductrice, **caractérisé en ce que** l'on fabrique d'abord un tissu support (2) en soi connu, d'un type courant du commerce, tissu support sur lequel on coud ensuite les boucles (4) électriquement conductrices, et **en ce que** la bande, la courroie, la bande transporteuse (20) sont fabriquées de façon en soi connue, en utilisant le tissu support (2) ainsi préparé.

13. Procédé de fabrication d'une bande, d'une courroie, d'une bande transporteuse (20) comprenant au moins un tissu support (2) dans lequel est incorporée au moins une boucle (4) électriquement conductrice, **caractérisé en ce que** l'on fabrique d'abord un tissu support (2) qui contient des fils (6a, 6b) électriquement conducteurs, espacés les uns des autres, dont deux fils, à chaque fois, sont reliés ensuite à une boucle (4) électriquement conductrice, en cousant deux fils (8a, 8b) électriquement conducteurs, et **en ce que** l'on fabrique la bande, la courroie, la bande transporteuse (20) de manière en soi connue, en utilisant le tissu support (2) ainsi préparé.

14. Procédé de fabrication d'une bande, d'une courroie, d'une bande transporteuse (20) comprenant un tirant métallique dans lequel est incorporée au moins une boucle (4) électriquement conductrice, **caractérisé en ce que** la boucle (4) est cousue d'abord sur un tissu support (2) semblable à un treillis, et **en ce que** le tissu support ainsi préparé est introduit, selon une position quelconque, dans l'ébauche de la bande transporteuse, la bande transporteuse (20) étant fabriquée de manière en soi connue.

15. Tissu support (2) servant à l'utilisation dans une bande, une courroie, une bande transporteuse (20) dans laquelle est incorporée au moins une boucle (4) électriquement conductrice, **caractérisé en ce que** la boucle (4) électriquement conductrice est cousue sur le tissu support (2).

16. Tissu support (2) selon la revendication 15, **caractérisé en ce que** la boucle (4) électriquement conductrice est conformée selon l'une quelconque des parties caractérisantes des revendications 2 à 10.
